(19) Europäisches Patentamt

European Patent Office

Office européen des brevets

(11) **EP 4 653 277 A1**

(12) **EUROPEAN PATENT APPLICATION**
published in accordance with Art. 153(4) EPC

(43) Date of publication:
**26.11.2025 Bulletin 2025/48**

(51) International Patent Classification (IPC):
**B60W 20/13** (2016.01)     **B60W 10/08** (2006.01)
**B60W 40/107** (2012.01)

(21) Application number: 24883889.8

(22) Date of filing: **24.05.2024**

(86) International application number:
**PCT/CN2024/095303**

(87) International publication number:
**WO 2025/091876 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.11.2023 CN 202311462043**

(71) Applicant: **Chery Automobile Co., Ltd.**
**Wuhu, Anhui 241006 (CN)**

(72) Inventors:
• **LIU, Xiaofei**
  **Wuhu, Anhui 241006 (CN)**
• **DAI, Xiangting**
  **Wuhu, Anhui 241006 (CN)**
• **WANG, Wei**
  **Wuhu, Anhui 241006 (CN)**

(74) Representative: **Yang, Shu**
**Withers & Rogers LLP**
**2 London Bridge**
**London SE1 9RA (GB)**

(54) **METHOD AND APPARATUS FOR CONTROLLING HYBRID VEHICLE, AND DEVICE AND STORAGE MEDIUM**

(57)     A method and apparatus for controlling a hybrid vehicle, and a device and a storage medium. The method comprises: acquiring a slope coefficient during the traveling of a vehicle (101), wherein the slope coefficient is used for indicating a road-surface slope during the traveling of the vehicle; acquiring a target SOC and an actual SOC of the vehicle (102), wherein the target SOC is determined on the basis of an operating mode of the vehicle; determining a first charging and discharging coefficient on the basis of the target SOC and the actual SOC (103); correcting the first charging and discharging coefficient on the basis of the slope coefficient, so as to obtain a second charging and discharging coefficient (104), wherein when the slope coefficient indicates that the vehicle is in an uphill state, a charging intention indicated by the second charging and discharging coefficient is higher than a charging intention indicated by the first charging and discharging coefficient; and controlling a power system of the vehicle on the basis of the second charging and discharging coefficient (105). By means of the method, an actual SOC of a power battery of a hybrid vehicle can be kept close to a target SOC under special road conditions.

Acquire a slope coefficient during the driving process of the hybrid vehicle — 101

Acquire a target SOC and an actual SOC of the hybrid vehicle — 102

Determine the first charge-discharge coefficient based on the target SOC and the actual SOC — 103

Acquire a second charge-discharge coefficient by revising the first charge-discharge coefficient based on the slope coefficient — 104

Control the power system of the hybrid vehicle based on the second charge-discharge coefficient — 105

FIG. 1

## Description

The present disclosure claims priority to Chinese Patent Application No. 202311462043.7, filed on November 2, 2023, and entitled "CONTROL METHOD, DEVICE AND EQUIPMENT OF HYBRID POWER VEHICLE AND STORAGE MEDIUM", the contents of which are incorporated herein by reference in their entirety.

## TECHNICAL FIELD

The present disclosure relates to the field of vehicle technology, and in particular relates to a method, apparatus, device, and storage medium for controlling a hybrid vehicle.

## BACKGROUND

A hybrid vehicle typically includes an engine, a motor corresponding to the engine, a power battery, and an electric motor. The engine supplies energy to the motor corresponding to the engine, and the power battery supplies energy to the electric motor. It is usually necessary to use the electric motor to drive the hybrid vehicle as much as possible and avoid the situation where the motor corresponding to the engine directly drives the hybrid vehicle. This is because the price of fuel is much higher than that of electricity, so direct driving of the hybrid vehicle by the motor corresponding to the engine will increase the driving cost of the hybrid vehicle.

However, during the driving process, the hybrid vehicle may encounter special road conditions, leading to the rapid consumption of state of charge (SOC) in the power battery. Once the SOC in the power battery is too low, it will result in insufficient output torque of the electric motor. In such cases, it may still be necessary for the motor corresponding to the engine to directly drive the hybrid vehicle. Therefore, under the special road conditions, it is necessary to control the hybrid vehicle to avoid the situation where the motor corresponding to the engine directly drives the hybrid vehicle.

## SUMMARY

The present disclosure provides a method, apparatus, device, and storage medium for controlling a hybrid vehicle, capable of keeping the actual SOC of the power battery of the hybrid vehicle near a target SOC when going uphill or downhill. The technical solution includes at least the following options.

In a first aspect, a method of controlling a hybrid vehicle is provided, the method includes:
acquiring a slope coefficient during a driving process of the hybrid vehicle, wherein the slope coefficient indicates a road slope during the driving process of the hybrid vehicle; acquiring a target state of charge (SOC) and an actual SOC of the hybrid vehicle, wherein the target SOC is determined based on a working mode of the hybrid vehicle; determining a first charge-discharge coefficient based on the target SOC and the actual SOC, wherein the first charge-discharge coefficient indicates a charge-discharge willingness of the hybrid vehicle; acquiring a second charge-discharge coefficient by revising the first charge-discharge coefficient based on the slope coefficient, wherein in a case where the slope coefficient indicates that the hybrid vehicle is in an uphill sate, a charge willingness indicated by the second charge-discharge coefficient is higher than that indicated by the first charge-discharge coefficient; and controlling a power system of the hybrid vehicle based on the second charge-discharge coefficient.

Optionally, in a case where the slope coefficient indicates that the hybrid vehicle is in the uphill sate, the slope coefficient is greater than a first slope threshold, the first slope threshold being greater than or equal to 0; acquiring the second charge-discharge coefficient by revising the first charge-discharge coefficient based on the slope coefficient includes: determining a first correction amount based on a first correction relationship and a difference between the slope coefficient and the first slope threshold, wherein the first correction amount is negative, the first correction relationship is a correspondence between the difference and a correction amount, and in the first correction relationship, the greater the difference between the slope coefficient and the first slope threshold, the smaller the correction amount; and determining a sum of the first correction amount and the first charge-discharge coefficient as the second charge-discharge coefficient, wherein the smaller the first charge-discharge coefficient is, the stronger the charge willingness of the hybrid vehicle is. Alternatively, in a case where the slope coefficient indicates that the hybrid vehicle is in a downhill state, the slope coefficient is less than a second slope threshold, the second slope threshold being less than or equal to 0; acquiring the second charge-discharge coefficient by revising the first charge-discharge coefficient based on the slope coefficient includes: determining a second correction amount based on a second correction relationship and a difference between the slope coefficient and the second slope threshold, wherein the second correction amount is positive, the second correction relationship is a correspondence between the difference and a correction amount, and in the second correction relationship, the smaller the difference between the slope coefficient and the second slope threshold, the larger the correction amount; and determining a sum of the second correction amount and the first charge-discharge coefficient as the second charge-discharge coefficient, wherein the smaller the first charge-discharge coefficient is, the stronger the charge willingness of the hybrid vehicle is.

Optionally, determining the first charge-discharge coefficient based on the target SOC and the actual SOC includes: acquiring a first difference between the target SOC and the actual SOC; and determining the first charge-discharge coefficient based on the first difference and a charge-discharge coefficient correspondence, wherein the charge-discharge coefficient correspondence is a correspondence between a difference and the charge-discharge coefficient, and in the charge-discharge coefficient correspondence, the larger the difference is, the larger the charge-discharge coefficient is.

Optionally, controlling the power system of the vehicle according to the second charge-discharge coefficient includes: determining a desired charge-discharge power based on a required power of the hybrid vehicle; acquiring a maximum charge-discharge power of the hybrid vehicle; determining a target charge power and a target discharge power based on the second charge-discharge coefficient, the desired charge-discharge power, and the maximum charge-discharge power; and controlling the power system of the hybrid vehicle by the target charge power and the target discharge power.

Optionally, determining the target charge power and the target discharge power based on the second charge-discharge coefficient, the desired charge-discharge power, and the maximum charge-discharge power includes: in response to the second charge-discharge coefficient being greater than 0, determining the desired charge power as the target charge power and acquiring the target discharge power by performing interpolation calculation on the desired discharge power and the maximum discharge power using the second charge-discharge coefficient, wherein the desired discharge power is a power when a charge-discharge coefficient is 0, and the maximum discharge power is a power when the charge-discharge coefficient is 1; or in response to the second charge-discharge coefficient being less than 0, determining the desired discharge power as the target discharge power and acquiring the target charge power by perform interpolation calculation on the desired charge power and the maximum charge power using the second charge-discharge coefficient, wherein the desired charge power is a power when a charge-discharge coefficient is 0, and the maximum charge power is a power when the charge-discharge coefficient is -1.

Optionally, acquiring the slope coefficient during the driving process of the hybrid vehicle includes: acquiring a vehicle acceleration and a longitudinal acceleration, wherein a direction of the hybrid vehicle acceleration is the same as a driving direction of the hybrid vehicle, and a direction of the longitudinal acceleration is perpendicular to a ground plane; determining a first acceleration based on the vehicle acceleration and the longitudinal acceleration, wherein the hybrid vehicle acceleration, the longitudinal acceleration, and the first acceleration form a right triangle; and determining the slope coefficient based on at least two of the vehicle acceleration, the longitudinal acceleration, and the first acceleration.

In a second aspect, an apparatus for controlling a hybrid vehicle is provided. The apparatus includes a first acquisition module, a second acquisition module, a determination module, a correction module, and a control module.

The first acquisition module is configured to acquire a slope coefficient during a driving process of the hybrid vehicle, wherein the slope coefficient indicates a road slope during the driving process of the hybrid vehicle. The second acquisition module is configured to acquire a target state of charge (SOC) and an actual SOC of the hybrid vehicle, wherein the target SOC is determined based on a working mode of the hybrid vehicle. The determination module is configured to determine a first charge-discharge coefficient based on the target SOC and the actual SOC, wherein the first charge-discharge coefficient indicates a charge-discharge willingness of the hybrid vehicle. The correction module is configured to acquire a second charge-discharge coefficient by revising the first charge-discharge coefficient based on the slope coefficient, wherein in a case where the slope coefficient indicates that the hybrid vehicle is in an uphill sate, a charge willingness indicated by the second charge-discharge coefficient is higher than that indicated by the first charge-discharge coefficient. The control module is configured to control the power system of the hybrid vehicle based on the second charge-discharge coefficient.

Optionally, in the case that the slope coefficient indicates that the hybrid vehicle is in the uphill sate, the slope coefficient is greater than a first slope threshold, the first slope threshold being greater than or equal to 0, the correction module is further configured to determine a first correction amount based on a first correction relationship and a difference between the slope coefficient and the first slope threshold, wherein the first correction amount is negative, the first correction relationship is a correspondence between the difference and a correction amount, and in the first correction relationship, the greater the difference between the slope coefficient and the first slope threshold is, the smaller the correction amount is; and determine a sum of the first correction amount and the first charge-discharge coefficient as the second charge-discharge coefficient, wherein the smaller the first charge-discharge coefficient is, the stronger the charge willingness of the hybrid vehicle is. Alternatively, in the case that the slope coefficient indicates that the hybrid vehicle is in a downhill state, the slope coefficient is less than a second slope threshold, the second slope threshold being less than or equal to 0, the correction module is further configured to determine a second correction amount based on a second correction relationship and a difference between the slope coefficient and the second slope threshold, wherein the second correction amount is positive, the second correction relationship is a correspondence between the difference and a correction amount, and in the second correction relationship, the smaller the difference between the slope coefficient and the second slope threshold, the larger the correction amount; and determine a sum of the second correction amount and the first charge-discharge coefficient as the second charge-discharge coefficient, wherein the smaller the first charge-discharge coefficient is, the stronger the charge willingness of the hybrid vehicle is.

Optionally, the determination module is configured to acquire a first difference between the target SOC and the actual SOC; and determine the first charge-discharge coefficient based on the first difference and a charge-discharge coefficient correspondence, wherein the charge-discharge coefficient correspondence is a correspondence between a difference and the charge-discharge coefficient, and in the charge-discharge coefficient correspondence, the larger the difference is, the larger the charge-discharge coefficient is.

Optionally, the control module is further configured to determine a desired charge-discharge power based on a required power of the hybrid vehicle; acquire a maximum charge-discharge power of the hybrid vehicle; determine a target charge power and a target discharge power based on the second charge-discharge coefficient, the desired charge-discharge power, and the maximum charge-discharge power; and control a power system of the hybrid vehicle by the target charge power and the target discharge power.

Optionally, the control module is further configured to, in response to the second charge-discharge coefficient being greater than 0, determine the desired charge power as the target charge power and acquire the target discharge power by performing interpolation calculation on the desired discharge power and the maximum discharge power using the second charge-discharge coefficient, wherein the desired discharge power is a power when a charge-discharge coefficient is 0, and the maximum discharge power is a power when the charge-discharge coefficient is 1; or, the control module is further configured to, in response to the second charge-discharge coefficient being less than 0, determining the desired discharge power as the target discharge power and acquiring the target charge power by perform interpolation calculation on the desired charge power and the maximum charge power using the second charge-discharge coefficient, wherein the desired charge power is a power when a charge-discharge coefficient is 0, and the maximum charge power is a power when the charge-discharge coefficient is -1.

Optionally, the first acquisition module is further configured to acquire a vehicle acceleration and a longitudinal acceleration, wherein a direction of the hybrid vehicle acceleration is the same as a driving direction of the hybrid vehicle, and a direction of the longitudinal acceleration is perpendicular to a ground plane; determine a first acceleration based on the vehicle acceleration and the longitudinal acceleration, wherein the hybrid vehicle acceleration, the longitudinal acceleration, and the first acceleration form a right triangle; and determine the slope coefficient based on at least two of the vehicle acceleration, the longitudinal acceleration, and the first acceleration.

In a third aspect, a computer device is provided. The computer device includes a processor and a memory storing at least one computer program therein, wherein the processor, when loading and executing the at least one computer program, is caused to perform the method for controlling the hybrid vehicle described in the first aspect.

In a fourth aspect, a computer-readable storage medium is provided. The computer-readable storage medium stores at least one computer program. Wherein the at least one computer program, when loaded and executed by a processor, causes the processor to perform the method for controlling the hybrid vehicle described in the first aspect.

In a fifth aspect, a computer program product is provided. The computer program product includes a computer program/instruction, wherein the computer program/instruction, when executed by a processor, causes the processor to perform the method for controlling the hybrid vehicle described in the first aspect.

The beneficial effects brought by the technical solutions in the embodiments of the present disclosure at least include the following.

The slope coefficient is adopted to correct the first charge-discharge coefficient to obtain the second charge-discharge coefficient, and the power system of the vehicle is controlled based on the second charge-discharge coefficient. In this way, the hybrid vehicle is effectively controlled during uphill driving, avoiding the situation where the actual SOC of the power battery is consumed too quickly due to uphill driving. The method keeps the actual SOC of the hybrid vehicle close to the target SOC at all times, thereby effectively extending the driving range when the vehicle is driven solely by the electric motor, reducing the driving cost of the hybrid vehicle, and further improving the economy of the vehicle.

**BRIEF DESCRIPTION OF THE DRAWINGS**

FIG. 1 is a flowchart of a method for controlling a hybrid vehicle according to some embodiments of the present disclosure;

FIG. 2 is a flowchart of another method for controlling a hybrid vehicle according to some embodiments of the present disclosure;

FIG. 3 is a structural schematic diagram of an apparatus for controlling a hybrid vehicle according to some embodiments of the present disclosure; and

FIG. 4 is a structural schematic diagram of a computer device according to some embodiments of the present disclosure.

## DETAILED DESCRIPTION

Unless otherwise defined, the technical or scientific terms used in the embodiments of the present disclosure are as they are usually understood by those of ordinary skill in the art to which the present disclosure pertains. The terms "first," "second," "third," and the like used in this specification and in the claims do not denote any order, quantity, or importance, but are merely intended to distinguish between different constituents. Similarly, the terms "a," "an," "the," and the like are not meant to be limiting, but rather denote the presence of at least one. The terms "comprise," "include," and their derivatives mean that elements or articles appearing before "comprise" or "include" embody the elements or articles and their equivalent elements appearing behind "comprise" or "include," not excluding any other elements or articles. The terms "upper", "lower," "left," "right," and the like are used only to indicate a relative positional relationship, and when the absolute position of the described object is changed, the relative positional relationship is also changed accordingly.

For clearer descriptions of the objects, technical solutions, and advantages of the present disclosure, the embodiments of the present disclosure are further described in detail below with reference to the drawings.

The explanations of terms involved in the embodiments are as follows.

SOC, i.e., state of charge, is expressed as the ratio of the remaining capacity of the battery to the total capacity of the battery, which takes a value ranging from 0 to 1, and is often described as a percentage number. In a general sense, SOC is also considered to refer to the electric quantity of the battery.

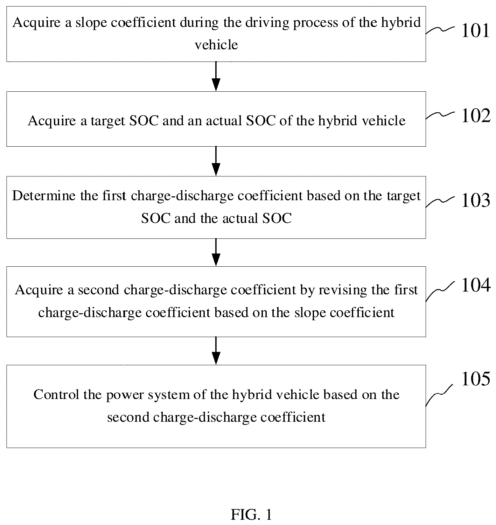

FIG. 1 is a flowchart of a method for controlling a hybrid vehicle according to some embodiments of the present disclosure. The method is performed by an on-board device of the hybrid vehicle, which may be a vehicle computer, a main control unit (MCU), or a functional module integrated on the system motherboard, etc. Referring to FIG. 1, the method includes the following steps 101 to 105.

In step 101, a slope coefficient is acquired during the driving process of the hybrid vehicle.

The slope coefficient indicates the road slope during the driving process of the hybrid vehicle.

In step 102, a target SOC and an actual SOC of the hybrid vehicle are acquired.

The target SOC is determined based on the working mode of the hybrid vehicle.

In step 103, the first charge-discharge coefficient is determined based on the target SOC and the actual SOC.

The first charge-discharge coefficient indicates a charge-discharge willingness of the hybrid vehicle, which refers to the degree of demand for charging or discharging required for the vehicle's actual SOC to reach the target SOC. For example, the smaller the charge-discharge coefficient, the stronger the vehicle's willingness to charge, that is, the higher the demand for charging required for the vehicle's actual SOC to reach the target SOC; or, the larger the charge-discharge coefficient, the stronger the vehicle's willingness to charge, that is, the higher the demand for discharging required for the vehicle's actual SOC to reach the target SOC.

In step 104, a second charge-discharge coefficient is acquired by revising the first charge-discharge coefficient based on the slope coefficient.

In the case that the slope coefficient indicates that the vehicle is in an uphill state, the charge willingness indicated by the second charge-discharge coefficient is higher than the charge willingness indicated by the first charge-discharge coefficient.

In step 105, the power system of the vehicle is controlled based on the second charge-discharge coefficient.

In the embodiments of the present disclosure, the slope coefficient is adopted to correct the first charge-discharge coefficient to obtain the second charge-discharge coefficient, and the power system of the vehicle is controlled based on the second charge-discharge coefficient. In this way, the hybrid vehicle is effectively controlled during uphill driving, avoiding the situation where the actual SOC of the power battery is consumed too quickly due to uphill driving. The method keeps the actual SOC of the hybrid vehicle close to the target SOC at all times, thereby effectively extending the driving range when the vehicle is driven solely by the electric motor, reducing the driving cost of the hybrid vehicle, and further improving the economy of the vehicle.

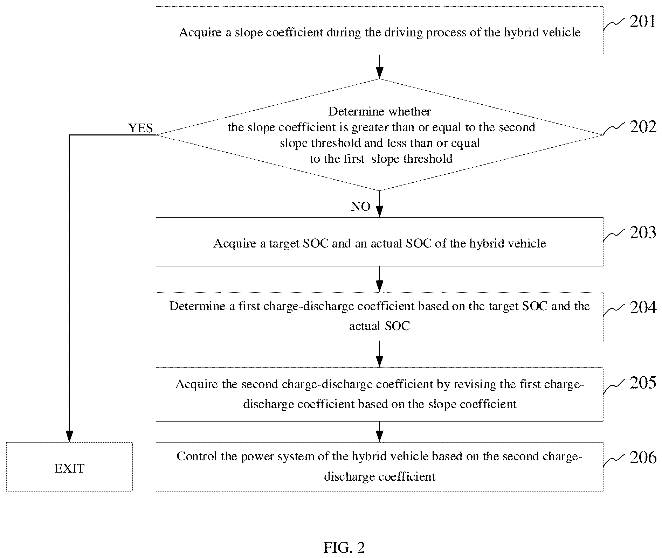

FIG. 2 is a flowchart of another method for controlling a hybrid vehicle according to some embodiments of the present disclosure. The method is performed by an on-board device of the vehicle, which may be a vehicle computer, a main control unit (MCU), or a functional module integrated on the system motherboard, etc. Referring to FIG. 1, the method includes the following steps 201 to 206.

In step 201, a slope coefficient is acquired during the driving process of the hybrid vehicle.

The slope coefficient indicates the magnitude of the road slope on which the vehicle is traveling. In some embodiments, the slope coefficient is a function value of the road slope angle, such as a sine value or a tangent value, or the slope coefficient is the value of the road slope angle.

In some embodiments, in the case that the slope coefficient is greater than the first slope threshold, it indicates that the vehicle is in an uphill state; in the case that the slope coefficient is less than the second slope threshold, it indicates that the vehicle is in a downhill state.

In some embodiments, the slope coefficient is obtained through a network map. A network map is a real-time connected map that records the road conditions and detailed data of various roads, such as road slope angles. The hybrid vehicle acquires the road slope angle from the network map through real-time networking, and then uses the value of the road slope angle as the slope coefficient; or the hybrid vehicle converts the road slope angle into a function value of the road slope angle, and then uses the function value of the road slope angle as the slope coefficient.

In some embodiments, the slope coefficient is obtained through the following three steps.

In the first step, a vehicle acceleration and a longitudinal acceleration are obtained.

The vehicle acceleration is the acceleration during the vehicle's driving, and its direction is the same as the vehicle's driving direction. The vehicle acceleration is obtained by calculating the vehicle speed at two adjacent moments during driving and the time length between the two adjacent moments. For example, the vehicle speed change is calculated by finding the difference between the vehicle speed 2 seconds ago and the current vehicle speed, and then dividing the vehicle speed change by the time (i.e., 2s) to obtain the vehicle acceleration.

The vehicle speed is obtained through a speed sensor installed on the wheels, such as a speed sensor installed on the front wheels or rear wheels. The rotational speed obtained by the speed sensor is converted to get the vehicle speed.

In some embodiments of the present disclosure, because the driving wheels may slip in special weather (such as rainy or snowy weather), the rotational speed of the driving wheels may not accurately reflect the vehicle speed. Therefore, the vehicle speed is determined through a speed sensor installed on a driven wheel. For example, when the driving wheels are the front wheels and the driven wheels are the rear wheels, the vehicle speed is determined through a speed sensor installed on one of the rear wheels. When the driving wheels are the rear wheels and the driven wheels are the front wheels, the vehicle speed is determined through a speed sensor installed on one of the front wheels.

In some examples, since the vehicle has two front wheels and two rear wheels, the average speed of the two front wheels is used to represent the front wheel speed, or the average speed of the two rear wheels is used to represent the rear wheel speed.

The direction of the longitudinal acceleration of the hybrid vehicle is perpendicular to the ground plane, and the longitudinal acceleration is obtained through a longitudinal acceleration sensor installed on the vehicle. If the measured longitudinal acceleration is positive, it indicates that the vehicle is in the uphill state, and the direction of the longitudinal acceleration of the hybrid vehicle is upward; if the measured longitudinal acceleration is negative, it indicates that the vehicle is in the downhill state, and the direction of the longitudinal acceleration of the hybrid vehicle is downward. On a flat slope, the longitudinal acceleration of the hybrid vehicle is extremely small and can be ignored.

In some embodiments, the longitudinal acceleration of the hybrid vehicle needs to be determined through the output value of the longitudinal acceleration sensor and the vehicle's lateral acceleration. The vehicle's lateral acceleration is perpendicular to both the vehicle acceleration and the longitudinal acceleration, and is obtained through a lateral acceleration sensor installed on the vehicle. Lateral acceleration affects the measurement accuracy of the vehicle's longitudinal acceleration sensor to a certain extent; that is, when the vehicle's lateral acceleration is too large, the output value of the vehicle's longitudinal acceleration may not be the real vehicle longitudinal acceleration. Therefore, in this case, it is necessary to compensate the output value of the vehicle's longitudinal acceleration sensor, and at this time, step 1 also includes obtaining the lateral acceleration.

In some embodiments, obtaining the longitudinal acceleration includes: obtaining a first longitudinal acceleration, where the first longitudinal acceleration is obtained through the longitudinal acceleration sensor; determining a longitudinal acceleration compensation value based on the lateral acceleration in the case that the lateral acceleration is greater than or equal to the acceleration threshold; compensating the first longitudinal acceleration with the longitudinal acceleration compensation value to obtain the longitudinal acceleration. In the case that the lateral acceleration is less than the acceleration threshold, the first longitudinal acceleration is the longitudinal acceleration. The acceleration threshold ranges from 5 to 7 meters per second squared ($m/s^2$), for example, 5 $m/s^2$, 6 $m/s^2$, or 7 $m/s^2$.

In some embodiments, the determination of the longitudinal acceleration compensation value according to the lateral acceleration is realized through a first correspondence, which is the correspondence between the lateral acceleration and the longitudinal acceleration compensation value. When the lateral acceleration is greater than the acceleration threshold, the corresponding longitudinal acceleration compensation value is determined according to the value of the lateral acceleration based on the first correspondence. The first correspondence is pre-stored in the memory of the on-board device, for example, stored in the memory of the on-board device before the vehicle leaves the factory or before executing the method in the embodiments of the present disclosure, so that the longitudinal acceleration compensation value is determined according to the lateral acceleration.

The first correspondence is obtained by measuring the difference between the output value of the longitudinal acceleration sensor and the real longitudinal acceleration under different lateral accelerations for multiple times, where the difference between the output value of the longitudinal acceleration sensor and the real longitudinal acceleration is the longitudinal acceleration compensation value. The embodiments of the present disclosure do not limit the specific way to obtain the first correspondence.

In the second step, the first acceleration is determined based on the vehicle acceleration and the longitudinal acceleration.

If the vehicle is driving on a slope, taking an uphill slope as an example, the vehicle acceleration is parallel to the slope and in the same direction as the vehicle's driving direction. The vehicle acceleration is decomposed into a horizontal acceleration component parallel to the ground plane and a vertical acceleration component perpendicular to the ground plane, and the horizontal acceleration component, the vertical acceleration component, and the vehicle acceleration form a right triangle, that is, the horizontal acceleration component, the vertical acceleration component, and the vehicle acceleration satisfy the Pythagorean theorem. The measured longitudinal acceleration is the vertical acceleration component, and the first acceleration calculated based on the longitudinal acceleration and the vehicle acceleration is the horizontal acceleration component.

Therefore, according to the Pythagorean theorem, the first acceleration is calculated through the vehicle acceleration and the longitudinal acceleration.

In the third step, the slope coefficient is determined based on at least two of the vehicle acceleration, the longitudinal acceleration, and the first acceleration.

The angle between the vehicle acceleration and the first acceleration is the road slope angle. When the vehicle acceleration, longitudinal acceleration, and first acceleration are all known, various ways can be used to calculate the slope coefficient corresponding to the road slope angle.

In some embodiments, if the slope coefficient is the sine value of the road slope angle, the sine value of the road slope angle is calculated based on the vehicle acceleration and the longitudinal acceleration; or, if the slope coefficient is the tangent value of the road slope angle, the tangent value of the road slope angle is calculated based on the longitudinal acceleration and the first acceleration; or, the slope coefficient is directly the angle value of the road slope angle. Since the slope coefficient needs to reflect the uphill or downhill through positive and negative values, and the cosine value is positive in the range of -90 degrees to 90 degrees, the slope coefficient cannot be the cosine value calculated based on the vehicle acceleration and the first acceleration.

The value of the road slope angle can be obtained by performing an arcsine transformation on the sine value of the road slope angle, or by performing an arctangent transformation on the tangent value of the road slope angle.

Exemplarily, the slope coefficient is the tangent value of the road slope angle. According to the principle of the tangent function, the tangent value is obtained by dividing the longitudinal acceleration by the first acceleration, and this tangent value is the slope coefficient. The first acceleration is always positive, and the positive or negative value of the longitudinal acceleration is related to uphill or downhill. When going uphill, since the longitudinal acceleration is positive, the calculated slope coefficient is positive; when going downhill, since the longitudinal acceleration is negative, the calculated slope coefficient is negative.

The road slope coefficient determined according to at least two of the vehicle acceleration, longitudinal acceleration, and first acceleration accurately reflects the magnitude of the road slope during the vehicle's driving, and is not affected by network signal fluctuations or the amount of records in the network map. Since the network map cannot accurately reflect the road slope when the network signal is poor, and the network map does not record the slopes of all roads, determining the slope coefficient using the vehicle's vehicle acceleration, longitudinal acceleration, and first acceleration is more accurate and stable than determining the road slope using the network map.

In step 202, it is determined whether the slope coefficient is greater than or equal to the second slope threshold and less than or equal to the first slope threshold.

In the case that the slope coefficient is greater than or equal to the second slope threshold and less than or equal to the first slope threshold, it indicates that the road on which the vehicle is driving is a flat slope, and the current process is exited.

If the slope coefficient is greater than the first slope threshold or less than the second slope threshold, continue to execute Step 203. In the case that the slope coefficient is greater than the first slope threshold, it indicates that the vehicle is in the uphill state; in the case that the slope coefficient is less than the second slope threshold, it indicates that the vehicle is in the downhill state, so step 203 is continued.

In the case that the slope coefficient is the tangent value of the road slope angle, the first slope threshold ranges from tan4° to tan6°, for example, tan4°, tan5°, or tan6°. The second slope threshold ranges from tan(-4°) to tan(-6°), for example, tan(-4°), tan(-5°), or tan(-6°).

In the case that the slope coefficient is the sine value of the road slope angle, the first slope threshold ranges from sin4° to sin6°, for example, sin4°, sin5°, or sin6°.

In the case that the slope coefficient is the value of the road slope angle, the first slope threshold ranges from 4° to 6°, for example, 4°, 5°, or 6°. The second slope threshold ranges from -4° to -6°, for example, -4°, -5°, or -6°.

In some embodiments, the method further includes: exiting the current process when the time during which the slope coefficient is greater than or equal to the second slope threshold and less than or equal to the first slope threshold reaches the time threshold, indicating that the road on which the vehicle is driving is a flat slope. When the time during which the slope coefficient is greater than the first slope threshold reaches the time threshold, or when the time during which the slope coefficient is less than the second slope threshold reaches the time threshold, step 203 is continued. In the embodiments of the present disclosure, the time threshold ranges from 2s to 6s, for example, 2s, 3s, 5s, or 6s.

Since the vehicle may encounter a flat slope but with an uneven road surface during driving, which may cause a sudden change in longitudinal acceleration and lead to inaccurate obtained slope coefficients, step 203 is continued only in the case that the time during which the slope coefficient is greater than the first slope threshold reaches the time threshold or in the case that the time during which the slope coefficient is less than the second slope threshold reaches the time threshold, thereby improving the accuracy of the obtained slope coefficient.

In step 203, a target SOC and an actual SOC of the hybrid vehicle are acquired.

The target SOC is determined by the working mode of the hybrid vehicle. The working modes of the hybrid vehicle include a driving mode and a power preservation mode.

The driving mode includes an economy mode, a standard mode, and a sport mode. Different driving modes correspond to different SOCs, and the SOCs corresponding to the driving modes of different vehicles may be different. By default, the driving mode is the standard mode, and the user can freely select the driving mode, for example, changing the driving mode from the standard mode to the economy mode, or from the standard mode to the sport mode, etc.

The power preservation modes include an intelligent power preservation mode and a forced power preservation mode. In the power preservation mode, the SOC is set by the user, and different power preservation modes may correspond to different SOCs.

In the embodiments of the present disclosure, the driving mode and the power preservation mode can be enabled at the same time, or only the driving mode is enabled and the power preservation mode is disabled. In the case that only the driving mode is enabled, the SOC corresponding to the driving mode is used as the target SOC. In the case that both the driving mode and the power preservation mode are enabled, if the power preservation mode is the intelligent power preservation mode, compare the SOCs corresponding to the driving mode and the intelligent power preservation mode, and select the larger SOC as the target SOC; if the power preservation mode is the forced power preservation mode, the SOC corresponding to the forced power preservation mode is used as the target SOC regardless of the SOC corresponding to the driving mode.

If the user enables the forced power preservation mode, it indicates that the user's strongest current expectation is to keep the electric quantity at the target SOC corresponding to the forced power preservation mode. Therefore, if the power preservation mode is enabled and it is the forced power preservation mode, the SOC corresponding to the forced power preservation mode is used as the target SOC regardless of the SOC corresponding to the driving mode.

The actual SOC of the hybrid vehicle is obtained through the current electric quantity of the power battery, and the current electric quantity is the actual SOC. For example, if the current electric quantity of the hybrid battery is 30%, the actual SOC is 30% at this time.

In step 204, a first charge-discharge coefficient is determined based on the target SOC and the actual SOC.

The first charge-discharge coefficient is used to characterize the charge willingness and the discharge willingness of the hybrid vehicle, and its value ranges between [-1, 1].

In some embodiments, if the first charge-discharge coefficient is positive, it indicates that the discharge willingness of the hybrid vehicle increases; if the first charge-discharge coefficient is negative, it indicates that the charge willingness of the hybrid vehicle increases. That is, the smaller the first charge-discharge coefficient, the stronger the charge willingness of the vehicle; the larger the first charge-discharge coefficient, the stronger the discharge willingness of the vehicle.

In some embodiments, if the first charge-discharge coefficient is negative, it indicates that the discharge willingness of the hybrid vehicle increases; if the first charge-discharge coefficient is positive, it indicates that the charge willingness of the hybrid vehicle increases. That is, the smaller the first charge-discharge coefficient, the stronger the discharge willingness of the vehicle; the larger the first charge-discharge coefficient, the stronger the charge willingness of the vehicle.

The following description is based on the scenario where the smaller the first charge-discharge coefficient, the stronger the charge willingness of the vehicle. For the scenario where the larger the first charge-discharge coefficient, the stronger the charge willingness of the vehicle, it is only necessary to modify the range [-1, 0] in the following description related to the first charge-discharge coefficient to [0, 1], and modify the range [0, 1] to [-1, 0], then make corresponding modifications to the relevant content.

In the case that the actual SOC is equal to the target SOC, the charge willingness of the hybrid vehicle is equal to the discharge willingness, and the first charge-discharge coefficient is 0, which is equivalent to the case where the charge power is equal to the discharge power.

In the case that the actual SOC is less than the target SOC, the charge willingness of the hybrid vehicle is greater than the discharge willingness, and the first charge-discharge coefficient is in the range [-1, 0], which is equivalent to the case where the charge power is greater than the discharge power. As the first charge-discharge coefficient decreases from 0, the corresponding discharge power remains unchanged, and the charge power gradually increases; when the first charge-discharge coefficient is -1, the corresponding charge power is the maximum charge power.

In the case that the actual SOC is greater than the target SOC, the charge willingness of the hybrid vehicle is less than the discharge willingness, and the first charge-discharge coefficient is in the range [0, 1], which is equivalent to the

**EP 4 653 277 A1**

case where the charge power is less than the discharge power. As the first charge-discharge coefficient increases from 0, the corresponding charge power remains unchanged, and the discharge power gradually increases; when the first charge-discharge coefficient is 1, the corresponding discharge power is the maximum discharge power.

In some embodiments, step 204 includes two steps as follows.

In the first step, a first difference between the target SOC and the actual SOC is acquired.

Optionally, the first difference is obtained by subtracting the target SOC from the actual SOC. When the actual SOC is greater than the target SOC, the first difference is greater than 0; when the actual SOC is less than the target SOC, the first difference is less than 0.

In the second step, the first charge-discharge coefficient is determined based on the first difference and the charge-discharge coefficient correspondence.

The charge-discharge coefficient correspondence is the correspondence between the first charge-discharge coefficient and the difference the target SOC and the actual SOC. In the charge-discharge coefficient correspondence, the larger the difference, the larger the first charge-discharge coefficient; the smaller the difference, the smaller the first charge-discharge coefficient. When the first difference is greater than or equal to the first threshold, it indicates that the actual SOC is much greater than the target SOC at this time, and the discharge willingness is the strongest. The maximum discharge power can be used to discharge the battery, so the first charge-discharge coefficient is 1 at this time. When the first difference is less than or equal to the second threshold, it indicates that the actual SOC is much less than the target SOC at this time, and the charge willingness is the strongest. The power battery needs to be charged with the maximum charge power to ensure that the actual SOC of the power battery quickly reaches the target SOC, so the first charge-discharge coefficient is -1 at this time.

In some embodiments of the present disclosure, the first threshold ranges from 20% to 40%, for example, 20%, 30%, 35%, or 40%. The second threshold ranges from -20% to -40%, for example, -20%, - 30%, -35%, or -40%.

Exemplarily, when the first threshold value is 20% and the second threshold value is -20%, the charge-discharge coefficient correspondence is shown in Table 1 below.

Table 1

| First charge-discharge coefficient | -1 | -0.75 | -0.5 | -0.25 | 0.25 | 0.25 | 0.5 | 0.75 | 1 |
|---|---|---|---|---|---|---|---|---|---|
| Difference | -20% | -15 % | -10 % | -5% | 0 | 5% | 10% | 15 % | 20% |

In some embodiments, if the first difference is between two first charge-discharge coefficients, the first charge-discharge coefficient corresponding to the one with the larger absolute value is selected as the first charge-discharge coefficient corresponding to the first difference. For example, if the first difference is 6%, which is between 5% and 10%, the first charge-discharge coefficient 0.5 corresponding to the difference 10% (with the larger absolute value) is selected as the first charge-discharge coefficient corresponding to 6%. Alternatively, if the first difference is -6%, which is between -5% and -10%, the first charge-discharge coefficient -0.5 corresponding to the difference -10% (with the larger absolute value) is selected as the first charge-discharge coefficient corresponding to -6%.

Alternatively, if the first difference is between two first charge-discharge coefficients, the first charge-discharge coefficient corresponding to the one with the smaller absolute value is selected as the first charge-discharge coefficient corresponding to the first difference. For example, if the first difference is 6%, which is between 5% and 10%, the first charge-discharge coefficient 0.25 corresponding to the difference 5% (with the smaller absolute value) is selected as the first charge-discharge coefficient corresponding to 6%. Alternatively, if the first difference is -6%, which is between -5% and -10%, the first charge-discharge coefficient -0.25 corresponding to the difference -5% (with the smaller absolute value) is selected as the first charge-discharge coefficient corresponding to -6%.

The first charge-discharge coefficient determined based on the first difference between the target SOC and the actual SOC can well reflect the current charge and discharge willingness of the hybrid vehicle.

In step 205, the second charge-discharge coefficient is acquired by revising the first charge-discharge coefficient based on the slope coefficient.

In some embodiments of the present disclosure, acquiring the second charge-discharge coefficient by revising the first charge-discharge coefficient based on the slope coefficient includes: when the slope coefficient is greater than the first slope threshold, that is, when the vehicle is in the uphill state, the first charge-discharge coefficient is corrected according to the difference between the slope coefficient and the first slope threshold to obtain the second charge-discharge coefficient, where the charge willingness indicated by the second charge-discharge coefficient is higher than that indicated by the first charge-discharge coefficient.

When the slope coefficient is less than the second slope threshold, that is, when the vehicle is in the downhill state, the first charge-discharge coefficient is corrected according to the difference between the slope coefficient and the second slope threshold. The discharge willingness indicated by the second charge-discharge coefficient is higher than that indicated by the first charge-discharge coefficient. In this way, the charge-discharge coefficient is corrected regardless of whether the vehicle is in the uphill or downhill state.

When the slope coefficient is greater than the first slope threshold, revising the first charge-discharge coefficient according to the difference between the slope coefficient and the first slope threshold includes: determining a first correction amount based on the difference between the slope coefficient and the first slope threshold and the first correction correspondence; taking the sum of the first correction amount and the first charge-discharge coefficient as the second charge-discharge coefficient.

The first correction amount is negative, and the first slope threshold is positive. The difference between the slope coefficient and the first slope threshold is the slope coefficient minus the first slope threshold.

The first correction correspondence is the correspondence between the correction amount and the difference between the slope coefficient and the first slope threshold. In the first correction correspondence, the larger the difference between the slope coefficient and the first slope threshold, the smaller the corresponding correction amount. Exemplarily, the slope coefficient is an angle value. In the first correction correspondence, for every increase of X degrees (X ranges from 1 to 3, for example, 1, 2, or 3) in the difference between the slope coefficient and the first slope threshold starting from 0, the correction amount decreases by Y (Y ranges from 0.03 to 0.05, for example, 0.03, 0.04, or 0.05) starting from 0.

Table 2 below is an example where the slope coefficient is an angle value, and the first correction correspondence is that for every increase of 1 degree in the difference between the slope coefficient and the first slope threshold starting from 0, the correction amount decreases by 0.03 starting from 0.

Table 2

| Difference between the slope coefficient and the first slope threshold | 0 | 1 | 10 | 15 | 30 |
|---|---|---|---|---|---|
| Correction amount | 0 | -0.03 | -0.3 | -0.45 | -0.9 |

When the slope coefficient is less than the second slope threshold, revising the first charge-discharge coefficient based on the difference between the slope coefficient and the second slope threshold includes: determining a second correction amount according to the difference between the slope coefficient and the second slope threshold and the second correction correspondence; taking the sum of the second correction amount and the first charge-discharge coefficient as the second charge-discharge coefficient.

The second correction amount is positive, and the second slope threshold is negative. The difference between the slope coefficient and the first slope threshold is the slope coefficient minus the first slope threshold.

The second correction correspondence is the correspondence between the correction amount and the difference between the slope coefficient and the second slope threshold. In the second correction correspondence, the smaller the difference between the slope coefficient and the second slope threshold, the larger the correction amount. For example, the slope coefficient is an angle value. In the second correction correspondence, for every decrease of X degrees (X ranges from 1 to 3, such as 1, 2, or 3) in the difference between the slope coefficient and the second slope threshold starting from 0, the correction amount increases by Y (Y ranges from 0.03 to 0.05, such as 0.03, 0.04, or 0.05) starting from 0.

Table 3 below is an example where the slope coefficient is an angle value, and the second correction correspondence is that for every decrease of 1 degree in the difference between the slope coefficient and the second slope threshold starting from 0, the correction amount increases by 0.03 starting from 0.

Table 3

| Difference between the slope coefficient and the second slope threshold | 0 | -1 | -10 | -15 | -30 |
|---|---|---|---|---|---|
| Correction amount | 0 | 0.03 | 0.3 | 0.45 | 0.9 |

It should be noted that when the first charge-discharge coefficient is corrected using the first correction amount or the second correction amount, the obtained second charge-discharge coefficient must not exceed the boundary values of the first charge-discharge coefficient (e.g., 1 or -1). If it exceeds the boundary values of the first charge-discharge coefficient, the corresponding boundary value of the first charge-discharge coefficient shall be used as the second charge-discharge coefficient.

For example, if the first charge-discharge coefficient is -0.1 and the first correction amount is -1, the second charge-discharge coefficient would be -1.1. However, since -1.1 exceeds the boundary value -1 of the first charge-discharge coefficient, the finally obtained second charge-discharge coefficient is -1.

In some embodiments of the present disclosure, by revising the first charge-discharge coefficient with a first correction amount that is negative when going uphill, the first charge-discharge coefficient can be reduced. A decrease in the first charge-discharge coefficient indicates an increase in the charge willingness. When the second charge-discharge coefficient is used to control the hybrid vehicle that is going uphill, it can compensate for the SOC consumption of the power battery caused by uphill driving, thereby keeping the actual SOC of the power battery close to the target SOC at all times.

When going downhill, the first charge-discharge coefficient is corrected with a second correction amount that is positive, which can increase the first charge-discharge coefficient. An increase in the first charge-discharge coefficient indicates an increase in the discharge willingness. Since the torque required by the vehicle when going downhill is reduced, the corresponding SOC consumption of the power battery is decreased. When the vehicle is controlled using the original first charge-discharge coefficient, the actual SOC of the power battery will be greater than the target SOC, resulting in the actual SOC of the power battery failing to stay close to the target SOC. However, when the second discharge coefficient is used to control the hybrid vehicle that is going downhill, the increased discharge power enables the actual SOC of the power battery to remain close to the target SOC at all times.

Alternatively, the step 205 can also be implemented in the following manner. When the slope coefficient is greater than the first slope threshold and the first charge-discharge coefficient is negative (i.e., the vehicle is in an uphill state and the first charge-discharge coefficient indicates an increased willingness to charge), the first correction coefficient is determined based on the ratio of the slope coefficient to the first slope threshold; and the second charge-discharge coefficient is determined based on the first correction coefficient and the first charge-discharge coefficient.

The first slope threshold is positive, the ratio of the slope coefficient to the first slope threshold is greater than 1, and the second charge-discharge coefficient is the product of the first correction coefficient and the first charge-discharge coefficient. Therefore, by revising the negative first charge-discharge coefficient with the first correction coefficient greater than 1 when going uphill, the first charge-discharge coefficient can be reduced, which indicates an increase in the willingness to charge of the second charge-discharge coefficient, i.e., the charge willingness indicated by the second charge-discharge coefficient is higher than the charge willingness indicated by the first charge-discharge coefficient.

When the slope coefficient is greater than the first slope threshold and the first charge-discharge coefficient is positive (i.e., the vehicle is in an uphill state and the first charge-discharge coefficient indicates an increased willingness to discharge), the second correction coefficient is determined based on the ratio of the first slope threshold to the slope coefficient; and the second charge-discharge coefficient is determined based on the second correction coefficient and the first charge-discharge coefficient.

The first slope threshold is positive, the ratio of the first slope threshold to the slope coefficient is less than 1, and the second charge-discharge coefficient can be the product of the second correction coefficient and the first charge-discharge coefficient. Therefore, by revising the positive first charge-discharge coefficient with a second correction coefficient less than 1 when going uphill, the first charge-discharge coefficient can be reduced, which indicates an increase in the willingness to charge of the second charge-discharge coefficient, i.e., the charge willingness indicated by the second charge-discharge coefficient is higher than the charge willingness indicated by the first charge-discharge coefficient.

When the slope coefficient is less than the second slope threshold and the first charge-discharge coefficient is positive (i.e., the vehicle is in a downhill state and the first charge-discharge coefficient indicates an increased willingness to discharge), the third correction coefficient is determined based on the ratio of the slope coefficient to the second slope threshold; and the second charge-discharge coefficient is determined based on the third correction coefficient and the first charge-discharge coefficient.

The first slope threshold is negative, the ratio of the slope coefficient to the second slope threshold is greater than 1, and the second charge-discharge coefficient is the product of the third correction coefficient and the first charge-discharge coefficient. Therefore, by revising the positive first charge-discharge coefficient with a third correction coefficient greater than 1 when going downhill, the first charge-discharge coefficient can be increased, which indicates an increase in the willingness to discharge of the second charge-discharge coefficient, i.e., the discharge willingness indicated by the second charge-discharge coefficient is higher than the discharge willingness indicated by the first charge-discharge coefficient.

When the slope coefficient is less than the second slope threshold and the first charge-discharge coefficient is negative (i.e., the vehicle is in a downhill state and the first charge-discharge coefficient indicates an increased willingness to charge), the fourth correction coefficient is determined based on the ratio of the second slope threshold to the slope coefficient; and the second charge-discharge coefficient is determined based on the fourth correction coefficient and the first charge-discharge coefficient.

The first slope threshold is negative, the ratio of the second slope threshold to the slope coefficient is less than 1, and the second charge-discharge coefficient can be the product of the fourth correction coefficient and the first charge-discharge coefficient. Therefore, by revising the negative first charge-discharge coefficient with a third correction coefficient less than 1 when going downhill, the first charge-discharge coefficient can be increased, which indicates an increase in the willingness to discharge of the second charge-discharge coefficient, i.e., the discharge willingness indicated by the second charge-discharge coefficient is higher than the discharge willingness indicated by the first charge-discharge coefficient.

Similar to the manner of revising the first charge-discharge coefficient using the first correction amount or the second correction amount, when the first charge-discharge coefficient is corrected using the first correction coefficient, the second correction coefficient, the third correction coefficient, or the fourth correction coefficient, the obtained second charge-discharge coefficient must not exceed the boundary values of the first charge-discharge coefficient (e.g., 1 or -1). If it exceeds the boundary values of the first charge-discharge coefficient, the corresponding boundary value of the first charge-discharge coefficient shall be used as the second charge-discharge coefficient.

In step 206, the power system of the hybrid vehicle is controlled based on the second charge-discharge coefficient.

Optionally, step 206 includes the following four steps.

In the first step 1, the desired charge-discharge power is determined based on the required power of the hybrid vehicle.

The required power of the hybrid vehicle refers to the power required for the driving of the hybrid vehicle, including the driver's required power and the load required power.

The driver's required power can be calculated according to the required torque and the motor speed. There are many related technologies regarding the specific calculation formula for calculating the driver's required power according to the required torque and the motor speed, which are not described in detail here. The required torque is the output torque of the engine, which can be obtained according to the driver's accelerator pedal stroke, for example, through the accelerator pedal stroke and the second correspondence. The second correspondence is the correspondence between the accelerator pedal stroke and the required torque, which can be obtained by measuring the engine output torque corresponding to different accelerator pedal strokes. The motor speed can be obtained through a speed sensor installed near the motor.

The load required power includes the working power of high-power loads in the vehicle. The high-power loads include but are not limited to direct current-direct current (DCDC) converters, air-conditioning compressors, and positive temperature coefficient (PTC) resistors (i.e., thermistors), etc. The load required power is related to the on-state of these loads. If a certain load is in the off-state, the load required power does not include the working power of that load. For example, when the air conditioner is off, the load required power does not include the power of the air-conditioning compressor.

The desired charge power is equal to the desired discharge power. After the desired discharge power is determined, the desired charge power can be determined based on the desired discharge power.

In the second step, the maximum charge power and the maximum discharge power of the hybrid vehicle are obtained.

The maximum charge power and maximum discharge power of the hybrid vehicle are the vehicle's own parameters. Different vehicles have different maximum charge powers and maximum discharge powers, which can be obtained according to the instruction manual provided by the vehicle manufacturer. The embodiments of the present disclosure do not limit the manner of obtaining the maximum charge power and the maximum discharge power.

Optionally, after obtaining the maximum charge power and maximum discharge power according to the instruction manual provided by the vehicle manufacturer, the maximum charge power and maximum discharge power are corrected according to the service life of the vehicle, or according to the ambient temperature where the power battery is located.

Revising the maximum charge power and maximum discharge power according to the service life of the vehicle may include: for each increase of A years in service life (A ranges from 1 to 2, for example, 1, 1.5, or 2), the maximum charge power and maximum discharge power are reduced by B% accordingly (B ranges from 4 to 7, for example, 4, 5, or 7).

Revising the maximum charge power and maximum discharge power according to the ambient temperature where the power battery is located may include: when the ambient temperature is higher than the first temperature threshold, for each increase of C degrees Celsius in temperature (C ranges from 15 to 30, for example, 15, 20, or 30), the maximum charge power and maximum discharge power are reduced by B% accordingly; when the ambient temperature is lower than the second temperature threshold, for each decrease of C degrees Celsius in temperature, the maximum charge power and maximum discharge power are reduced by B% accordingly. The first temperature threshold can be 40 to 50 degrees Celsius, for example, 40°C, 45°C, or 50°C. The second temperature threshold can be -10 to -20 degrees Celsius, for example, -10°C, -15°C, or -20°C.

After the vehicle is used, the devices in the vehicle may age, which may affect (e.g., reduce) the maximum charge power and maximum discharge power of the vehicle; the ambient temperature where the vehicle is located may also affect the maximum charge power and maximum discharge power of the vehicle. For example, a low-temperature environment will slow down the migration speed of carriers in the power battery, thereby reducing the maximum charge power and maximum discharge power. Therefore, revising the maximum charge power and maximum discharge power of the vehicle according to the service life of the vehicle or the ambient temperature where the power battery is located can make the obtained maximum charge power and maximum discharge power more accurate.

In the third step, the target charge power and target discharge power are determined according to the second charge-discharge coefficient, desired charge power, desired discharge power, maximum charge power, and maximum discharge power.

When the second charge-discharge coefficient is greater than 0, the desired charge power is taken as the target charge power. The target discharge power can be obtained by interpolating the desired discharge power and the maximum discharge power through the second charge-discharge coefficient. Wherein, the desired discharge power is the value corresponding to the charge-discharge coefficient of 0, and the maximum discharge power is the value corresponding to the charge-discharge coefficient of 1.

The manner of interpolating to calculate the target discharge power is summarized as the following Formula (2.1), and the target discharge power is obtained by calculating using (2.1).

$$(P_{1max} - P_1)*(K/(1-0))+P_1 \qquad\qquad (2.1)$$

$P_{1max}$ is the maximum discharge power, $P_1$ is the desired discharge power, and K is the second charge-discharge coefficient.

For example, if the second charge-discharge coefficient is 0.5, the desired discharge power is 3kw, and the maximum discharge power is 5kw, then according to the value of the second charge-discharge coefficient, the interpolation calculation is performed on the desired discharge power and the maximum discharge power, that is, (5kw-3kw)*0.5+3kw=4kw.

When the second charge-discharge coefficient is less than 0, the desired discharge power is taken as the target discharge power. The target charge power is obtained by interpolating the desired charge power and the maximum charge power through the second charge-discharge coefficient. Wherein, the desired charge power is the value corresponding to a charge-discharge coefficient of 0, and the maximum charge power is the value corresponding to a charge-discharge coefficient of -1.

The manner of interpolating to calculate the target charge power can be summarized as the following Formula (2.2), and the target charge power can be obtained by calculating using (2.2).

$$(P_{2max} -P_2)*(K/(-1-0))+P_2 \qquad\qquad (2.2)$$

$P_{2max}$ is the maximum charge power, $P_2$ is the desired charge power, and K is the second charge-discharge coefficient.

For example, the second charge-discharge coefficient is -0.5, the desired charge power is 3kw, and the maximum charge power is 5kw, interpolation calculations are performed on the desired charge power and the maximum charge power based on the second charge-discharge coefficient, that is, (5kw-3kw)*(-0.5/(-1-0)) + 3kw = 4kw.

The target charge power and target discharge power are determined by means of an interpolation calculation, which takes into account the vehicle's maximum charging/discharge power and desired charging/discharge power. Therefore, the target charging/discharge power obtained based on the second charge-discharge coefficient is more in line with the actual conditions of the vehicle.

In the fourth step, the power system of the hybrid vehicle is controlled by using the target charge power and target discharge power.

Controlling the hybrid vehicle by using the target charge power and target discharge power includes: calculating the motor torques corresponding to the target charge power and target discharge power respectively based on the power mode of the hybrid vehicle; and controlling the operation of the vehicle motor using the motor torque corresponding to the target charge power and the motor torque corresponding to the target discharge power.

The power modes of the hybrid vehicle include: series mode, parallel mode, and series-parallel mode. In series mode, the engine does not directly drive the vehicle; instead, it drives the motor corresponding to the engine to supply power to the power battery, and the power battery supplies power to the electric motor, which then drives the vehicle. In parallel mode, the engine may drive the vehicle together with the electric motor, and other aspects are consistent with those in series mode. In series-parallel mode, it includes both the driving methods of series mode and parallel mode.

Taking the series mode as an example, controlling the hybrid vehicle by using the target charge power and target discharge power includes two scenarios.

In the first scenario, if the charge-discharge coefficient is greater than 0, the calculated target charge power is the desired charge power (i.e., the charge power remains unchanged); the calculated target discharge power is greater than the original desired discharge power. The calculated target discharge power is allocated to the power system according to actual demand. Due to the increase in discharge power, the increased part of the discharge power can ensure that the power system operates as close to the optimal operating condition as possible, thereby improving the vehicle's operating efficiency.

In the second scenario, if the charge-discharge coefficient is less than 0, the calculated target discharge power is the desired discharge power (i.e., the discharge power remains unchanged); the calculated target charge power is greater than the original desired charge power. The calculated target charge power is converted from electrical power to mechanical power, and the converted mechanical power is further converted into a target charging torque. The motor corresponding to the engine is then controlled to operate at this target charging torque. Due to the increase in charge power, the torque of the motor corresponding to the engine increases accordingly, which means the charging speed of the power battery is accelerated, thus ensuring that the actual SOC of the power battery quickly reaches the target SOC.

For the parallel mode or series-parallel mode, the difference from the series mode is that in the second scenario, after obtaining the target charging torque, the motor corresponding to the engine does not operate solely at the target charging torque, but operates at the sum of the target charging torque and the original driving torque used to drive the vehicle.

Since the charge-discharge coefficient is corrected during uphill driving, reducing the charge-discharge coefficient (i.e., enhancing the willingness of the vehicle to charge), when the vehicle is controlled using the corrected charge-discharge coefficient, the target charge power corresponding to the corrected charge-discharge coefficient is greater than that corresponding to the original charge-discharge coefficient. This makes it possible to compensate for the SOC consumption caused by uphill driving, ensuring that the actual SOC of the power battery remains close to the target SOC during uphill driving. During downhill driving, the charge-discharge coefficient is corrected to increase its value (i.e., enhancing the willingness of the vehicle to discharge). When the vehicle is controlled using the corrected charge-discharge coefficient, the target discharge power corresponding to the corrected charge-discharge coefficient is greater than that corresponding to the original charge-discharge coefficient. Since SOC consumption decreases during downhill driving and energy recovery occurs, the increased discharge power can also keep the actual SOC close to the target SOC. Moreover, the increased discharge power can be used in the power system, enabling the power system to operate under optimal conditions during downhill driving, which helps improve vehicle performance and extend its service life.

In the embodiments of the present disclosure, the second charge-discharge coefficient is acquired by revising the first charge-discharge coefficient using the slope coefficient, the target charge-discharge power is determined based on the second charge-discharge coefficient, and then the power system of the hybrid vehicle is determined based on the target charge-discharge power. On the one hand, it is possible to keep the actual SOC close to the target SOC whether the vehicle is uphill or downhill, which extends the driving range of the hybrid vehicle when driven solely by the electric motor, thereby reducing the driving cost of the hybrid vehicle and further improving the vehicle's economy. On the other hand, when the target SOC is the SOC corresponding to the power preservation mode, since the SOC corresponding to the power preservation mode is set by the user, keeping the actual SOC close to the target SOC improves user experience and further enhances user satisfaction.

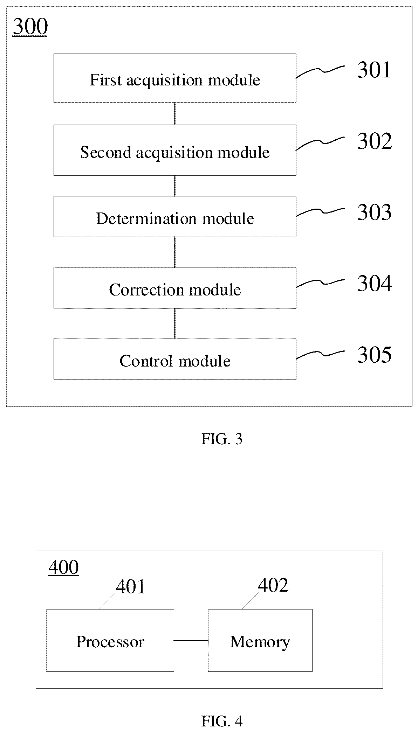

FIG. 3 is a structural schematic diagram of an apparatus for controlling a hybrid vehicle according to some embodiments of the present disclosure. Referring to FIG. 3, the apparatus 300 for controlling a hybrid vehicle includes a first acquisition module 301, a second acquisition module 302, a determination module 303, a correction module 304, and a control module 305.

The first acquisition module 301 is configured to acquire a slope coefficient during a driving process of the hybrid vehicle, wherein the slope coefficient indicates a road slope during the driving process of the hybrid vehicle.

The second acquisition module 302 is configured to acquire a target state of charge (SOC) and an actual SOC of the hybrid vehicle, wherein the target SOC is determined based on a working mode of the hybrid vehicle.

The determination module 303 is configured to determine a first charge-discharge coefficient based on the target SOC and the actual SOC, wherein the first charge-discharge coefficient indicates a charge-discharge willingness of the hybrid vehicle.

The correction module 304 is configured to acquire a second charge-discharge coefficient by revising the first charge-discharge coefficient based on the slope coefficient, wherein in a case where the slope coefficient indicates that the hybrid vehicle is in an uphill sate, a charge willingness indicated by the second charge-discharge coefficient is higher than that indicated by the first charge-discharge coefficient.

The control module 305 is configured to control a power system of the hybrid vehicle based on the second charge-discharge coefficient.

Optionally, in the case that the slope coefficient indicates that the hybrid vehicle is in the uphill sate, the slope coefficient is greater than a first slope threshold, the first slope threshold being greater than or equal to 0, the correction module 304 is further configured to determine a first correction amount based on a first correction relationship and a difference between the slope coefficient and the first slope threshold, wherein the first correction amount is negative, the first correction relationship is a correspondence between the difference and a correction amount, and in the first correction relationship, the greater the difference between the slope coefficient and the first slope threshold, the smaller the correction amount; and determine a sum of the first correction amount and the first charge-discharge coefficient as the second charge-discharge coefficient, wherein the smaller the first charge-discharge coefficient is, the stronger the charge willingness of the hybrid vehicle is. Alternatively, in the case that the slope coefficient indicates that the hybrid vehicle is in a downhill state, the slope coefficient is less than a second slope threshold, the second slope threshold being less than or equal to 0, the correction module 304 is further configured to determine a second correction amount based on a second correction relationship and a difference between the slope coefficient and the second slope threshold, wherein the second correction amount is positive, the second correction relationship is a correspondence between the difference and a correction amount, and in the second correction relationship, the smaller the difference between the slope coefficient and the second slope threshold, the larger the correction amount; and determine a sum of the second correction amount and the first charge-discharge coefficient as the second charge-discharge coefficient, wherein the smaller the first charge-discharge coefficient is, the stronger the charge willingness of the hybrid vehicle is.

Optionally, the determination module 303 is configured to acquire a first difference between the target SOC and the actual SOC; and determine the first charge-discharge coefficient based on the first difference and a charge-discharge coefficient correspondence, wherein the charge-discharge coefficient correspondence is a correspondence between a difference and the charge-discharge coefficient, and in the charge-discharge coefficient correspondence, the larger the difference is, the larger the charge-discharge coefficient is.

Optionally, the control module 305 is further configured to determine a desired charge-discharge power based on a required power of the hybrid vehicle; acquire a maximum charge-discharge power of the hybrid vehicle; determine a target charge power and a target discharge power based on the second charge-discharge coefficient, the desired charge-discharge power, and the maximum charge-discharge power; and control a power system of the hybrid vehicle by the target charge power and the target discharge power.

Optionally, the control module 305 is further configured to, in response to the second charge-discharge coefficient being greater than 0, determine the desired charge power as the target charge power and acquire the target discharge power by performing interpolation calculation on the desired discharge power and the maximum discharge power using the second charge-discharge coefficient, wherein the desired discharge power is a power when a charge-discharge coefficient is 0, and the maximum discharge power is a power when the charge-discharge coefficient is 1. Alternatively, the control module 305 is further configured to, in response to the second charge-discharge coefficient being less than 0, determining the desired discharge power as the target discharge power and acquiring the target charge power by perform interpolation calculation on the desired charge power and the maximum charge power using the second charge-discharge coefficient, wherein the desired charge power is a power when a charge-discharge coefficient is 0, and the maximum charge power is a power when the charge-discharge coefficient is -1.

Optionally, the first acquisition module 301 is further configured to acquire a vehicle acceleration and a longitudinal acceleration, wherein a direction of the hybrid vehicle acceleration is the same as a driving direction of the hybrid vehicle, and a direction of the longitudinal acceleration is perpendicular to a ground plane; determine a first acceleration based on the vehicle acceleration and the longitudinal acceleration, wherein the hybrid vehicle acceleration, the longitudinal acceleration, and the first acceleration form a right triangle; and determine the slope coefficient based on at least two of the vehicle acceleration, the longitudinal acceleration, and the first acceleration.

It should be noted that when the apparatus for controlling the hybrid vehicle provided in the above embodiments controls the hybrid vehicle, division of the above function modules is merely used as an example. In practical application, the above functions may be allocated to and completed by different function modules as required, that is, an internal structure of the apparatus is divided into different function modules to complete all or some of the above functions. In addition, the apparatus for controlling the hybrid vehicle provided in the above embodiments belongs to the same conception as the embodiments of the method. For a specific implementation process, refer to the method embodiments, and details are not described herein again.

The division of modules in the embodiments of the present disclosure is schematic and merely a logical function division. In actual implementation, there may be other division methods. In addition, each functional module in each embodiment of the present disclosure may be integrated into one processor, or may exist independently physically, or two or more modules may be integrated into one module. The above integrated modules may be implemented in the form of hardware or in the form of software functional modules.

FIG. 4 is a structural schematic diagram of a computer device according to some embodiments of the present disclosure. As shown in FIG. 4, the computer device 400 includes a processor 401 and a memory 402.

The processor 401 includes one or more processing cores, for example, a 4-core processor or an 8-core processor. The processor 401 is implemented by using at least one hardware form of digital signal processing (DSP), field-programmable gate array (FPGA), and programmable logic array (PLA). The processor 401 may alternatively include a main processor and a coprocessor. The main processor is configured to process data in an awake state, also referred to as a central processing unit (CPU), and the coprocessor is a low-power processor configured to process data in a standby state. In some embodiments, the processor 401 is integrated with a graphics processing unit (GPU). The GPU is configured to be responsible for rendering and drawing content that a display needs to display. In some embodiments, the processor 401 further includes an artificial intelligence (AI) processor. The AI processor is configured to process computing operations related to machine learning.

The memory 402 includes one or more computer-readable storage media, which may be non-transitory. The memory 402 may further include a high-speed random access memory (RAM) and a non-transitory memory, such as one or more magnetic disk storage devices and a flash storage device. In some embodiments, the non-transitory computer-readable storage medium in the memory 402 is configured to store at least one instruction. The at least one instruction is executed by the processor 401 to implement the method for controlling a hybrid vehicle provided in the embodiments of the present disclosure.

A person skilled in the art may understand that the structure shown in FIG. 4 does not constitute a limitation to the computer device 400, and it may include more or fewer components than those shown in the figure, or combine some components, or use a different component deployment.

The embodiments of the present disclosure further provide a non-transitory computer-readable storage medium including an instruction. The instruction, when executed by a computer device, causes the computer device to perform the method for controlling a hybrid vehicle provided in the embodiments of the present disclosure.

The embodiments of the present disclosure further provide a computer program product, including a computer program/instruction, wherein the computer program/instruction is executed by a processor to perform the method for controlling a hybrid vehicle provided in the embodiments of the present disclosure.

The above are merely optional embodiments of the present disclosure and are not intended to limit the present disclosure. Any modifications, equivalent substitutions, improvements, and the like made within the principle of the present disclosure should fall within the protection scope of the present disclosure.

**Claims**

1.  A method for controlling a hybrid vehicle, comprising:

    acquiring a slope coefficient during a driving process of the hybrid vehicle, wherein the slope coefficient indicates a road slope during the driving process of the hybrid vehicle;
    acquiring a target state of charge (SOC) and an actual SOC of the hybrid vehicle, wherein the target SOC is determined based on a working mode of the hybrid vehicle;
    determining a first charge-discharge coefficient based on the target SOC and the actual SOC, wherein the first charge-discharge coefficient indicates a charge-discharge willingness of the hybrid vehicle;
    acquiring a second charge-discharge coefficient by revising the first charge-discharge coefficient based on the slope coefficient, wherein in a case where the slope coefficient indicates that the hybrid vehicle is in an uphill sate, a charge willingness indicated by the second charge-discharge coefficient is higher than a charge willingness indicated by the first charge-discharge coefficient; and
    controlling a power system of the hybrid vehicle based on the second charge-discharge coefficient.

2.  The method according to claim 1, wherein in a case where the slope coefficient indicates that the hybrid vehicle is in the uphill state, the slope coefficient is greater than a first slope threshold, the first slope threshold being greater than or equal to 0; and
    acquiring the second charge-discharge coefficient by revising the first charge-discharge coefficient based on the slope coefficient comprises:

    determining a first correction amount based on a first correction relationship and a difference between the slope coefficient and the first slope threshold, wherein the first correction amount is negative, the first correction relationship is a correspondence between a difference and a correction amount, and in the first correction relationship, the greater the difference between the slope coefficient and the first slope threshold is, the smaller the correction amount is; and
    determining a sum of the first correction amount and the first charge-discharge coefficient as the second charge-discharge coefficient, wherein the smaller the first charge-discharge coefficient is, the stronger the charge willingness of the hybrid vehicle is.

3.  The method according to claim 1, wherein in a case where the slope coefficient indicates that the hybrid vehicle is in a downhill state, the slope coefficient is less than a second slope threshold, the second slope threshold being less than or equal to 0; and
    acquiring the second charge-discharge coefficient by revising the first charge-discharge coefficient based on the slope coefficient comprises:

    determining a second correction amount based on a second correction relationship and a difference between the slope coefficient and the second slope threshold, wherein the second correction amount is positive, the second correction relationship is a correspondence between a difference and a correction amount, and in the second correction relationship, the smaller the difference between the slope coefficient and the second slope threshold is, the larger the correction amount is; and

determining a sum of the second correction amount and the first charge-discharge coefficient as the second charge-discharge coefficient, wherein the smaller the first charge-discharge coefficient is, the stronger the charge willingness of the hybrid vehicle is.

4. The method according to claim 1, wherein determining the first charge-discharge coefficient based on the target SOC and the actual SOC comprises:

acquiring a first difference between the target SOC and the actual SOC; and

determining the first charge-discharge coefficient based on the first difference and a charge-discharge coefficient correspondence, wherein the charge-discharge coefficient correspondence is a correspondence between a difference and a charge-discharge coefficient, and in the charge-discharge coefficient correspondence, the larger the difference is, the larger the charge-discharge coefficient is.

5. The method according to claim 1, wherein controlling the power system of the hybrid vehicle based on the second charge-discharge coefficient comprises:

determining a desired charge-discharge power based on a required power of the hybrid vehicle;

acquiring a maximum charge-discharge power of the hybrid vehicle;

determining a target charge power and a target discharge power based on the second charge-discharge coefficient, the desired charge-discharge power, and the maximum charge-discharge power; and

controlling the power system of the hybrid vehicle using the target charge power and the target discharge power.

6. The method according to claim 5, wherein determining the target charge power and the target discharge power based on the second charge-discharge coefficient, the desired charge-discharge power, and the maximum charge-discharge power comprises:

determining, in response to the second charge-discharge coefficient being greater than 0, a desired charge power as the target charge power, and acquiring the target discharge power by performing interpolation calculation on a desired discharge power and a maximum discharge power using the second charge-discharge coefficient, wherein the desired discharge power is a power when a charge-discharge coefficient is 0, and the maximum discharge power is a power when a charge-discharge coefficient is 1; and

determining, in response to the second charge-discharge coefficient being less than 0, a desired discharge power as the target discharge power and acquiring the target charge power by perform interpolation calculation on a desired charge power and a maximum charge power using the second charge-discharge coefficient, wherein the desired charge power is a power when a charge-discharge coefficient is 0, and the maximum charge power is a power when a charge-discharge coefficient is -1.

7. The method according to any one of claims 1 to 6, wherein acquiring the slope coefficient during the driving process of the hybrid vehicle comprises:

acquiring a vehicle acceleration and a longitudinal acceleration, wherein a direction of the hybrid vehicle acceleration is the same as a driving direction of the hybrid vehicle, and a direction of the longitudinal acceleration is perpendicular to a ground plane;

determining a first acceleration based on the vehicle acceleration and the longitudinal acceleration, wherein the hybrid vehicle acceleration, the longitudinal acceleration, and the first acceleration form a right triangle; and

determining the slope coefficient based on at least two of the vehicle acceleration, the longitudinal acceleration, or the first acceleration.

8. An apparatus for controlling a hybrid vehicle, comprising:

a first acquisition module, configured to acquire a slope coefficient during a driving process of the hybrid vehicle, wherein the slope coefficient indicates a road slope during the driving process of the hybrid vehicle;

a second acquisition module, configured to acquire a target state of charge (SOC) and an actual SOC of the hybrid vehicle, wherein the target SOC is determined based on a working mode of the hybrid vehicle;

a determination module, configured to determine a first charge-discharge coefficient based on the target SOC and the actual SOC, wherein the first charge-discharge coefficient indicates a charge-discharge willingness of the hybrid vehicle;

a correction module, configured to acquire a second charge-discharge coefficient by revising the first charge-discharge coefficient based on the slope coefficient, wherein in a case where the slope coefficient indicates that the hybrid vehicle is in an uphill sate, a charge willingness indicated by the second charge-discharge coefficient is higher than a charge willingnesss indicated by the first charge-discharge coefficient; and

a control module, configured to control a power system of the hybrid vehicle based on the second charge-discharge coefficient.

9. A computer device, comprising a processor and a memory storing at least one computer program therein, wherein the processor, when loading and executing the at least one computer program, is caused to perform the method as defined in any one of claims 1 to 7.

10. A computer-readable storage medium storing at least one computer program, wherein the at least one computer program, when loaded and executed by a processor, causes the processor to perform the method as defined in any one of claims 1 to 7.

11. A computer program product, comprising at least one computer program/instruction, wherein the at least one computer program/instruction, when executed by a processor, causes the processor to perform the method as defined in any one of claims 1 to 7.

Acquire a slope coefficient during the driving process of the hybrid vehicle ～ 101

Acquire a target SOC and an actual SOC of the hybrid vehicle ～ 102

Determine the first charge-discharge coefficient based on the target SOC and the actual SOC ～ 103

Acquire a second charge-discharge coefficient by revising the first charge-discharge coefficient based on the slope coefficient ～ 104

Control the power system of the hybrid vehicle based on the second charge-discharge coefficient ～ 105

FIG. 1

Acquire a slope coefficient during the driving process of the hybrid vehicle — 201

Determine whether the slope coefficient is greater than or equal to the second slope threshold and less than or equal to the first slope threshold — 202

YES

NO

Acquire a target SOC and an actual SOC of the hybrid vehicle — 203

Determine a first charge-discharge coefficient based on the target SOC and the actual SOC — 204

Acquire the second charge-discharge coefficient by revising the first charge-discharge coefficient based on the slope coefficient — 205

EXIT

Control the power system of the hybrid vehicle based on the second charge-discharge coefficient — 206

FIG. 2

FIG. 3

FIG. 4

## INTERNATIONAL SEARCH REPORT

| | International application No. |
|---|---|
| | **PCT/CN2024/095303** |

---

**A. CLASSIFICATION OF SUBJECT MATTER**

B60W 20/13(2016.01)i; B60W 10/08(2006.01)i; B60W 40/107(2012.01)n

According to International Patent Classification (IPC) or to both national classification and IPC

**B. FIELDS SEARCHED**

Minimum documentation searched (classification system followed by classification symbols)

IPC: B60W 20/-, B60W 10/-, B60W 40/-

Documentation searched other than minimum documentation to the extent that such documents are included in the fields searched

Electronic data base consulted during the international search (name of data base and, where practicable, search terms used)

CNTXT; CNABS; ENTXT; VEN; CNKI: 奇瑞, (混合动力 or 混动 or 油电混合), 坡度, 上坡, 下坡, SOC, 充放电, (目标 or 期望 or 预设), (实际 or 当前), (意愿 or 意图), 修正, (阈值 or 门限 or 限值), 差值: (hybrid or HEV), (slope? or gradient?), (upslope or uphill or ascent or upgrad+), (downhill or downgrad+), SOC or (state w of w charge), (charg+ 3w discharg+), (target or objective or expect+ or desir+ or preset+), (actual or current or present), (wish+ or intent+), correct+, (threshold? or limit +), difference?

**C. DOCUMENTS CONSIDERED TO BE RELEVANT**

| Category* | Citation of document, with indication, where appropriate, of the relevant passages | Relevant to claim No. |
|---|---|---|
| PX | CN 117246304 A (CHERY AUTOMOBILE CO., LTD.) 19 December 2023 (2023-12-19) claims 1-10 | 1-11 |
| X | CN 115113059 A (GREAT WALL MOTOR CO., LTD.) 27 September 2022 (2022-09-27) description, paragraphs [0068]-[0168], and figures 1-3 | 1, 8-11 |
| Y | CN 115113059 A (GREAT WALL MOTOR CO., LTD.) 27 September 2022 (2022-09-27) description, paragraphs [0068]-[0168], and figures 1-3 | 7 |
| Y | CN 112429010 A (DONGFENG COMMERCIAL VEHICLE CO., LTD.) 02 March 2021 (2021-03-02) description, paragraphs [0030]-[0070], and figures 1-2 | 7 |
| A | CN 115465255 A (CHINA FAW GROUP CORP., LTD.) 13 December 2022 (2022-12-13) entire document | 1-11 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 August 2024** | **30 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/095303** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 114684105 A (SHENZHEN ZHENYU NEW ENERGY POWER TECHNOLOGY CO., LTD.) 01 July 2022 (2022-07-01)<br>entire document | 1-11 |
| A | CN 113815621 A (SAIC-GM-WULING AUTOMOBILE CO., LTD.) 21 December 2021 (2021-12-21)<br>entire document | 1-11 |
| A | CN 113525341 A (HYUNDAI MOTOR COMPANY et al.) 22 October 2021 (2021-10-22)<br>entire document | 1-11 |
| A | US 2008319597 A1 (DENSO CORP.) 25 December 2008 (2008-12-25)<br>entire document | 1-11 |
| A | US 6166449 A (TOYOTA MOTOR CO., LTD.) 26 December 2000 (2000-12-26)<br>entire document | 1-11 |

Form PCT/ISA/210 (second sheet) (July 2022)

**INTERNATIONAL SEARCH REPORT**
Information on patent family members

International application No.

**PCT/CN2024/095303**

| Patent document cited in search report | | | Publication date (day/month/year) | Patent family member(s) | | | Publication date (day/month/year) |
|---|---|---|---|---|---|---|---|
| CN | 117246304 | A | 19 December 2023 | None | | | |
| CN | 115113059 | A | 27 September 2022 | None | | | |
| CN | 112429010 | A | 02 March 2021 | None | | | |
| CN | 115465255 | A | 13 December 2022 | WO | 2024103627 | A1 | 23 May 2024 |
| CN | 114684105 | A | 01 July 2022 | None | | | |
| CN | 113815621 | A | 21 December 2021 | None | | | |
| CN | 113525341 | A | 22 October 2021 | KR | 20210129760 | A | 29 October 2021 |
| | | | | DE | 102020214704 | A1 | 21 October 2021 |
| | | | | US | 2021323532 | A1 | 21 October 2021 |
| US | 2008319597 | A1 | 25 December 2008 | JP | 2009001099 | A | 08 January 2009 |
| US | 6166449 | A | 26 December 2000 | EP | 0829389 | A2 | 18 March 1998 |
| | | | | JPH | 10150701 | A | 02 June 1998 |
| | | | | DE | 69709002 | D1 | 24 January 2002 |

Form PCT/ISA/210 (patent family annex) (July 2022)

**REFERENCES CITED IN THE DESCRIPTION**

**Patent documents cited in the description**

- CN 202311462043